# EUROPEAN PATENT SPECIFICATION

(11) **EP 3 321 481 B1**
(45) Date of publication and mention of the grant of the patent: **04.03.2020**
(21) Application number: 17201263.5
(22) Date of filing: 13.11.2017
(51) Int. Cl.: F01M 11/06, F16N 19/00, F01D 25/20, B64D 37/22, F16H 57/04

(54) **FLUID SUPPLY OVER RANGE OF GRAVITATIONAL CONDITIONS**
FLÜSSIGKEITSZUFUHR ÜBER BEREICH VON GRAVITATIONSBEDINGUNGEN
ALIMENTATION EN FLUIDE SUR UNE GAMME DE CONDITIONS GRAVITATIONNELLES

(30) Priority: 14.11.2016 US 201615350754
(43) Date of publication of application: 16.05.2018
(73) Proprietor: United Technologies Corporation, Farmington, CT 06032 (US)
(72) Inventor: XU, JinQuan, East Greenwich, RI Rhode Island 02818 (US)
(74) Representative: Dehns

(56) References cited:
- EP-A1- 1 593 539
- DE-C1- 19 530 256
- JP-A- H04 109 011
- JP-U- S5 161 444
- JP-U- S53 152 033
- US-A- 3 022 053
- US-A1- 2009 013 959
- US-A1- 2011 067 659
- US-A1- 2014 076 661

## Description

### BACKGROUND

Gas turbine engines, such as those which power aircraft and industrial equipment, employ a compressor to compress air that is drawn into the engine and a turbine to capture energy associated with the combustion of a fuel-air mixture. At least on an aircraft, an engine may assume various positions/attitudes and may be subject to various forces over the operational lifetime of the engine.

United States patent application publication number 2014/0076661 A1 (hereinafter referred to as the '661 publication) describes systems/architectures for providing lubricant to various components (e.g., journal pins, gears, etc.) of the engine, regardless of the environmental conditions in which the engine is operating. As described in the '661 publication, it may be desirable to ensure that those components are not starved of lubricant (e.g., that the components/sub-systems receive lubricant in an amount that is greater than a threshold) during reduced-G conditions in which acceleration due to the Earth's gravitational field is partially or entirely counteracted by aircraft maneuvers and/or orientation, such as for example during free-fall brought on by a loss of engine power. Reduced-G conditions include, for example, negative gravity (also referred to herein as negative-G), zero gravity (also referred to herein as zero-G), and positive gravity (also referred to herein as positive-G) conditions materially less than about 9.8 meters/sec/sec. Failure to ensure that the threshold supply of lubricant is provided to a component during, e.g., reduced-G conditions may render the component inoperable. Thus, what is needed are improved techniques for providing at least a threshold amount of lubricant to one or more components of the engine, inclusive of when the engine is operating in reduced-G conditions.

US 2014/076661 A1 discloses a prior art system as set forth in the preamble of claim 1.

US 2009/013959 A1 discloses a prior art lubrication system for an engine.

US 3 022 053 A discloses a prior art emergency fuel feeding system for airplanes.

EP 1 593 539 A1 discloses a prior art oil level balancing suction swimmer.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

The present invention is directed to a system as recited in claim 1.

In some embodiments, the fluid includes at least one of hydraulic fluid, fuel, or refrigerant.

In some embodiments, the fluid includes a lubricant.

In some embodiments, the system further comprises a mass coupled to the second end of the conduit.

In some embodiments, the first end region density is a collective density of a density of the conduit at the second end of the conduit and a density of the mass.

In some embodiments, the system further comprises a pole coupled to the mass, where the mass is limited to movement along a span of the pole.

In some embodiments, a first end of the pole is coupled to a first end of the tank, and where a second end of the pole is coupled to a second end of the tank.

In some embodiments, at least one of the first end of the pole or the first end of the tank is fitted with a first stop, and where at least one of the second end of the pole or the second end of the tank is fitted with a second stop.

In some embodiments, the first stop includes at least one of a bolt and nut or an instance of an elastomeric material.

In some embodiments, the mass includes a core contained within a shell, where the core is made of a first material and the shell is made of a second material, and where the second material is different from the first material.

In some embodiments, the core is made of metal and where the shell is made of an elastomer.

In some embodiments, the mass is substantially shaped as a sphere.

In some embodiments, the system further comprises a pump coupled to the first end of the conduit.

In some embodiments, the tank is pressurized to convey the fluid from the second end of the conduit to the first end of the conduit.

In some embodiments, the conduit includes a flexible conduit radially inside a protective layer.

In some embodiments, the protective layer is an additional conduit, and where the flexible conduit is disposed within the additional conduit such that the conduit is arranged as a tube-within-a-tube.

In some embodiments, the first end region density is greater than or equal to the fluid density such that the conduit inlet remains immersed in the fluid stored in the tank when the fluid in the tank is under positive gravity conditions, and the conduit inlet moves substantially in unison with the fluid in the tank when the fluid in the tank is subject to a change in gravitational conditions.

### BRIEF DESCRIPTION OF THE DRAWINGS

The present disclosure is illustrated by way of example and not limited in the accompanying figures in which like reference numerals indicate similar elements. The drawing figures are not necessarily drawn to scale unless specifically indicated otherwise.
FIG. 1 is a side cutaway illustration of a geared turbine engine.
FIG. 2A illustrates a system for providing lubricant, where the system is shown during positive-G conditions.
FIG. 2B illustrates the system of FIG. 2A during negative-G conditions.
FIG. 2C illustrates a system for providing lubricant, where the system includes a pole to constrain a movement of a mass.
FIG. 3 illustrates a mass that may be coupled to a conduit in accordance with aspects of this disclosure.
FIG. 4 illustrates a conduit in accordance with aspects of this disclosure.
FIG. 5 illustrates a plot of gravitational conditions versus time in accordance with an exemplary embodiment.
FIG. 6 illustrates a fluid circuit incorporating a fan drive gear system (FDGS) and a tank in accordance with aspects of this disclosure.

### DETAILED DESCRIPTION

It is noted that various connections are set forth between elements in the following description and in the drawings (the contents of which are incorporated in this specification by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities or a space/gap between the entities that are being coupled to one another.

Aspects of the disclosure are directed to apparatuses, systems, and methods associated with an engine. In some embodiments, a conduit having an associated mass may be provided. The conduit may be at least partially located in a tank. A density associated with the conduit may be equal to or greater than a density of a fluid that is present in the tank, such that at least a portion of the conduit (e.g., an end of the conduit) may be positioned/immersed in the fluid within the tank.

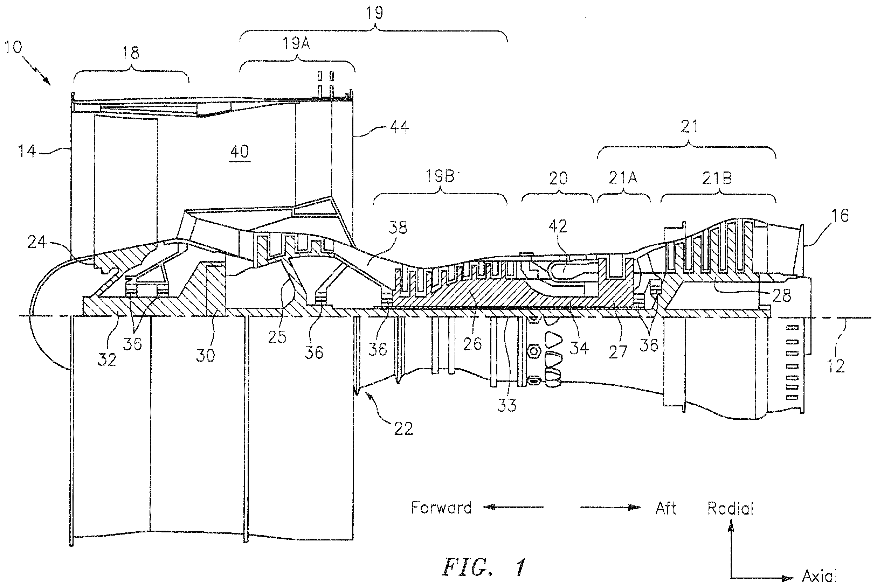

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36; e.g., rolling element and/or thrust bearings. Each of these bearings 36 is connected to the engine housing 22 by at least one stationary structure such as, for example, an annular support strut.

As one skilled in the art would appreciate, in some embodiments a fan drive gear system (FDGS), which may be incorporated as part of the gear train 30, may be used to separate the rotation of the fan rotor 24 from the rotation of the rotor 25 of the low pressure compressor section 19A and the rotor 28 of the low pressure turbine section 21B. For example, such an FDGS may allow the fan rotor 24 to rotate at a different (e.g., slower) speed relative to the rotors 25 and 28.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines. Aspects of the disclosure may be applied in connection with non-geared engines.

As described above, occasionally an engine (e.g., the engine 10 of FIG. 1) may operate in reduced-G conditions. Such reduced-G conditions may be experienced during a flight on an aircraft. Some areas of the engine, such as the FDGS, may require a relatively non-interrupted supply of lubricant (e.g., may require lubricant in an amount greater than a threshold, potentially as measured over a predetermined period of time).

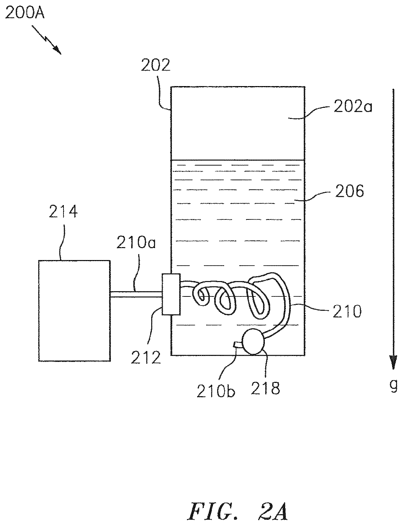

FIG. 2A illustrates a system 200A in accordance with aspects of this disclosure. Superimposed in FIG. 2A is an axis 'g', where the direction of the axis is shown with respect to the Earth's gravitational field. In particular, the system 200A is shown under positive-G conditions.

The system 200A may include a tank 202 that may store a quantity/volume of a lubricant 206, where the lubricant 206 may include oil. Due to the positive-G conditions, the lubricant 206 is shown as being biased towards the bottom of the tank 202 in FIG. 2A, such that a portion 202a of the tank 202 located towards the top of the tank 202 may be substantially devoid/free of lubricant.

A conduit 210 may be used to supply at least a portion of the lubricant 206 in the tank 202 to one or more components of the engine. For example, a first end 210a of the conduit 210 may emerge from an outlet 212 of the tank 202 and may be in fluid communication with a mechanism 214, e.g., a pump, where the pump may draw/pull at least a portion of the lubricant 206 from the tank 202 (e.g., the lubricant 206 may be conveyed from a second end/inlet 210b of the conduit 210 to the first end/outlet 210a of the conduit 210). In some embodiments, the tank 202 may be pressurized in order to encourage a flow of lubricant out of the tank 202 (e.g., from the second end 210b of the conduit 210 towards the first end 210a of the conduit 210).

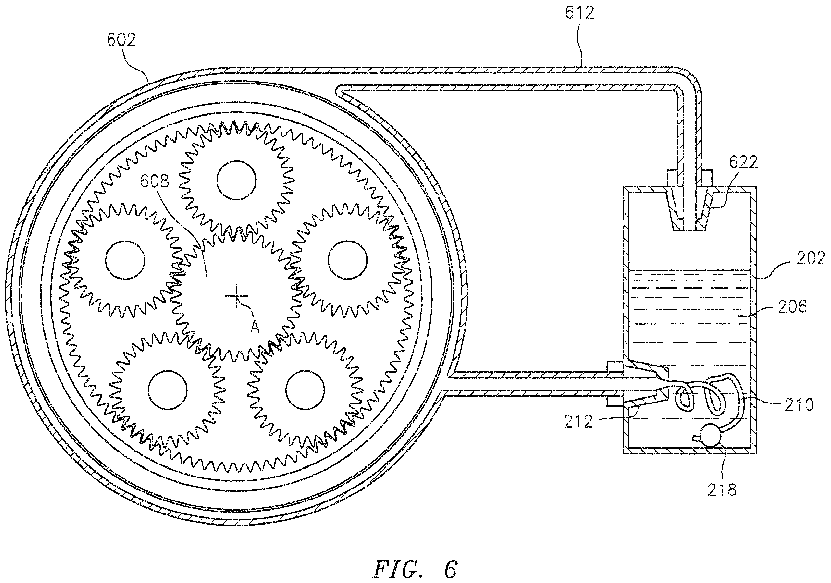

In some embodiments (see FIG. 6), operation of an FDGS 602 (e.g., a rotation of gears 608 included in the FDGS 602) may serve as the mechanism 214 by which the fluid is drawn/pulled from the tank 202. In FIG. 6, the outlet 212 of the tank 202 is shown as fluidly coupled to the FDGS 602. The FDGS 602 may receive/consume at least a portion of the fluid provided from the tank 202 and may return (via an output/outlet 612 of the FDGS) at least a portion of the fluid to an inlet 622 of the tank 202. In this respect, a complete fluid circuit may be established between the tank 202 and the FDGS 602. While FIG. 6 shows the fluid circuit incorporating the tank 202 and the FDGS 602, one skilled in the art would appreciate that the fluid circuit may include additional components/devices. For example, the aforementioned '661 publication describes and illustrates such additional components.

Referring back to FIG. 2A, the second end 210b of the conduit 210 may be positioned within/immersed in the lubricant 206 within the tank 202 in order to ensure that a supply of lubricant is available to, e.g., the mechanism 214. A density of the conduit 210 (or at least a density of the conduit 210 coinciding with the second end 210b) is selected to be greater than or equal to a density of the lubricant 206 so that the second end 210b is positioned at the bottom of the tank 202 or immersed in the lubricant 206 in FIG. 2A. In some embodiments, a density of the conduit 210/second end 210b may be selected to be up to twenty times greater than a density of the lubricant 206. In some embodiments, a ratio of the density of the conduit 210/second end 210b to a density of the lubricant 206 may be selected to be within a range of: (1) equal to or greater than one and (2) less than or equal to twenty.

In some embodiments, a mass 218 may optionally be included at/proximate the end 210b of the conduit 210. The mass 218 may be included in embodiments where, e.g., a density of the conduit 210 is less than a density of the lubricant 206. Collectively, the density of the conduit 210 and the mass 218 in a region coinciding with the end 210b may be greater than or equal to a density of the lubricant 206. While described separately, the mass 218 may be included/integral with the conduit 210.

While the mass 218 is shown as assuming a (substantially) spherical shape, other shapes for the mass 218 may be used in some embodiments. The mass 218 may be coupled to the conduit 210 using one or more attachment techniques, such as for example using an adhesive, using a fastener (e.g., a bolt and a nut), welding, brazing, bonding, etc.

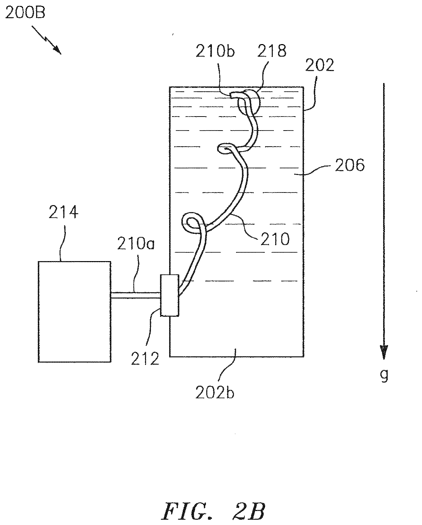

As described above, the system 200A is shown during positive-G conditions. In comparison, the system 200B of FIG. 2B (where the system 200B may structurally coincide with the system 200A of FIG. 2A) is shown during negative-G conditions (relative to the Earth's gravitational field 'g'). In such negative-G conditions, the lubricant 206, the end 210b, and the mass 218 (to the extent that the mass 218 is included in some embodiments) are shown as being biased towards the top of the tank 202 in FIG. 2B, such that a portion 202b of the tank 202 located towards the bottom of the tank 202 may be substantially devoid/free of lubricant.

As the relative densities of the conduit 210 (collectively with the mass 218, to the extent that the mass 218 is included) and the lubricant 206 do not change based on whether the system 200A or 200B is operating in positive-G or negative-G conditions, respectively, the end 210b may be positioned within/immersed in the lubricant 206 within the tank 202 in both FIGS. 2A and 2B. The length/span of the conduit 210 may be selected to enable the end 210b/mass 218 to substantially travel the entire length (measured top-to-bottom or bottom-to-top in FIGS. 2A-2B) of the tank 202, as well as reach the furthest corners of the tank (the right-most corners, bottom and top, in FIGS. 2A and 2B, given that the end 210a is shown on the left-most end of the tank 202 in FIGS. 2A and 2B).

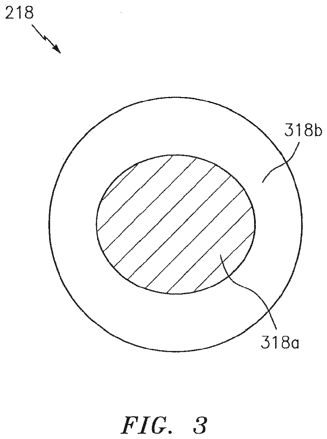

Referring to FIG. 3, in some embodiments the mass 218 may include a core 318a contained within a shell 318b. The core 318a may be made of a first material (e.g., a metal) and the shell 318b may be made of a second material (e.g., an elastomer), the second material being different from the first material. The shell 318b may help to protect the structural integrity of the core 318a and/or the tank 202 (see FIGS. 2A-2B) in the event that the mass 218 contacts the tank 202. For example, the shell 318b may absorb/dissipate any energy associated with the mass 218 impacting a wall/perimeter of the tank 202.

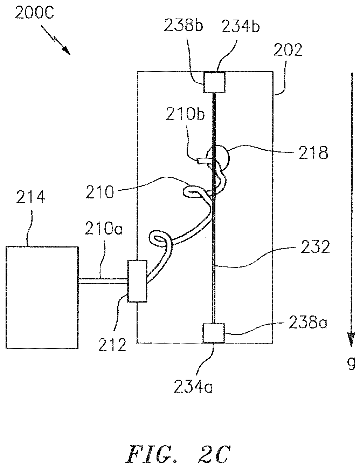

Referring to FIG. 2C, a system 200C is shown. The system 200C may incorporate many of the same components/devices described above in relation to the systems 200A and 200B of FIGS. 2A and 2B, respectively. The system 200C is shown as including a pole/post 232. The pole 232 may be coupled to the tank 202 at a first (distal) end 234a and at a second (distal) end 234b as shown in FIG. 2C. The mass 218 may be coupled to the pole 232, such that movement of the mass 218 may be limited to movement along a length/span of the pole 232 (e.g., lateral movement of the mass 218 within the tank 202 may be substantially prohibited/precluded).

The tank 202/pole 232 may be fitted with a first stop 238a proximate the first end 234a. The tank 202/pole 232 may be fitted with a second stop 238b proximate the second end 234b. The stops 238a and 238b may take one or more forms, such as a bolt and nut, an instance of an elastomeric material, etc. The stops 238a and 238b may prevent the mass 218 from contacting the walls/perimeter of the tank 202 as the mass 218 moves along the pole 232 (where such mass 218 movement may be based on a change in gravitational conditions, e.g., a change from positive-G conditions to negative-G conditions or vice versa).

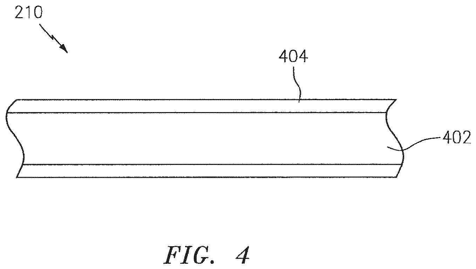

Referring to FIG. 4, an exemplary embodiment of the conduit 210 (see FIGS. 2A-2C) is shown. The conduit 210 may include a flexible conduit 402. The conduit 402 may be radially inside an optional protective layer 404. In some embodiments, the layer 404 may take the form of another conduit (e.g., a conduit in addition to the conduit 402), such that the conduit 210 may be configured as a coaxial conduit/tube (e.g., the conduit 210 may be arranged as a tube-within-a-tube). The layer 404 may contain any lubricant that may escape from the inner conduit 402; this can help to prevent a leak of lubricant in regions outside of the tank 202 (see FIGS. 2A-2C). While the conduit 210 is shown includes two conduits/layers 402 and 404, any number of sub-conduits or layers may be included in some embodiments.

The conduit 402 may be manufactured from an organic polymer. The organic polymer may be capable of withstanding temperatures up to hundreds of degrees Celsius, e.g., 121°C without being degraded or solubilized by lubricant or by by-products of lubricant degradation. In some embodiments, the organic polymer may have an elastic modulus of about 10⁵ to 10⁶ Pascals at a temperature of, e.g., 65 to 121°C. In some embodiments, the organic polymers used in the conduit 402 may have a glass transition temperature that is greater than 65°C and a melting point that is greater than 121°C. In an embodiment, the glass transition temperature of the organic polymer is about 65°C to 121°C, while the melting point of the organic polymer is greater than 121°C to 232°C.

Organic polymers used in the conduit 402 can be selected from a wide variety of thermoplastic polymers, blends of thermoplastic polymers, thermosetting polymers, or blends of thermoplastic polymers with thermosetting polymers. The organic polymer may also be a blend of polymers, copolymers, terpolymers, or combinations comprising at least one of the foregoing organic polymers. The organic polymer can also be an oligomer, a homopolymer, a copolymer, a block copolymer, an alternating block copolymer, a random polymer, a random copolymer, a random block copolymer, a graft copolymer, a star block copolymer, a dendrimer, or the like, or a combination comprising at last one of the foregoing organic polymers.

Examples of the organic polymers that can be used in the conduit 402 are polyacetals, polyolefins, polyacrylics, polycarbonates, polystyrenes, polyesters, polyamides, polyamideimides, polyarylates, polyarylsulfones, polyethersulfones, polyphenylene sulfides, polyvinyl chlorides, polysulfones, polyimides, polyetherimides, polytetrafluoroethylenes, polyetherketones, polyether etherketones, polyether ketone ketones, polybenzoxazoles, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, styrene acrylonitrile, acrylonitrile-butadiene-styrene (ABS), polyethylene terephthalate, polybutylene terephthalate, polyurethane, polytetrafluoroethylene, fluorinated ethylene propylene, perfluoroalkoxyethylene, polychlorotrifluoroethylene, polyvinylidene fluoride, or the like, or a combination thereof.

Examples of thermosetting polymers suitable for use in the conduit 402 include epoxy polymers, unsaturated polyester polymers, polyimide polymers, bismaleimide polymers, bismaleimide triazine polymers, cyanate ester polymers, vinyl polymers, benzoxazine polymers, benzocyclobutene polymers, acrylics, alkyds, phenol-formaldehyde polymers, novolacs, resoles, melamine-formaldehyde polymers, urea-formaldehyde polymers, hydroxymethylfurans, isocyanates, diallyl phthalate, triallyl cyanurate, triallyl isocyanurate, unsaturated polyesterimides, or the like, or a combination thereof.

In an embodiment, a thermosetting polymer may be an elastomer. Suitable elastomers are polybutadienes, polyisoprenes, styrene-butadiene rubber, poly(styrene)-block-poly(butadiene), poly(acrylonitrile)-block-poly(styrene)-block-poly(butadiene) (ABS), polychloroprenes, epichlorohydrin rubber, polyacrylic rubber, silicone elastomers (polysiloxanes), fluorosilicone elastomers, fluoroelastomers, perfluoroelastomers, polyether block amides (PEBA), chlorosulfonated polyethylene, ethylene propylene diene rubber (EPR), ethylene-vinyl acetate elastomers, or the like, or a combination thereof.

Examples of blends of thermoplastic polymers include acrylonitrile-butadiene-styrene/nylon, polycarbonate/acrylonitrile-butadiene-styrene, acrylonitrile butadiene styrene/polyvinyl chloride, polyphenylene ether/polystyrene, polyphenylene ether/nylon, polysulfone/acrylonitrile-butadiene-styrene, polycarbonate/thermoplastic urethane, polycarbonate/polyethylene terephthalate, polycarbonate/polybutylene terephthalate, thermoplastic elastomer alloys, nylon/elastomers, polyester/elastomers, polyethylene terephthalate/polybutylene terephthalate, acetal/elastomer, styrene-maleicanhydride/acrylonitrile-butadiene-styrene, polyether etherketone/polyethersulfone, polyether etherketone/polyetherimide polyethylene/nylon, polyethylene/polyacetal, or the like.

In some embodiments, the conduit 402 is manufactured from an elastomer. Exemplary elastomers are silicone elastomers, fluorosilicone elastomers, fluoroelastomers, perfluoroelastomers, or a combination thereof.

The layer 404 may comprise a single or multiple layers of one or more of a metal, a ceramic, or a composite. The layers may be thin enough or ductile enough to permit the conduit 402 to have the desired flexibility (e.g., flexibility in an amount greater than a threshold). Exemplary metals that may be used for the layer 404 include iron, titanium, aluminum, cobalt, nickel, silver, or the like, or a combination thereof. Exemplary composite that may be used for the layer 404 include organic matrix composites, metal matrix composites, ceramic matrix composites, or the like, or a combination thereof.

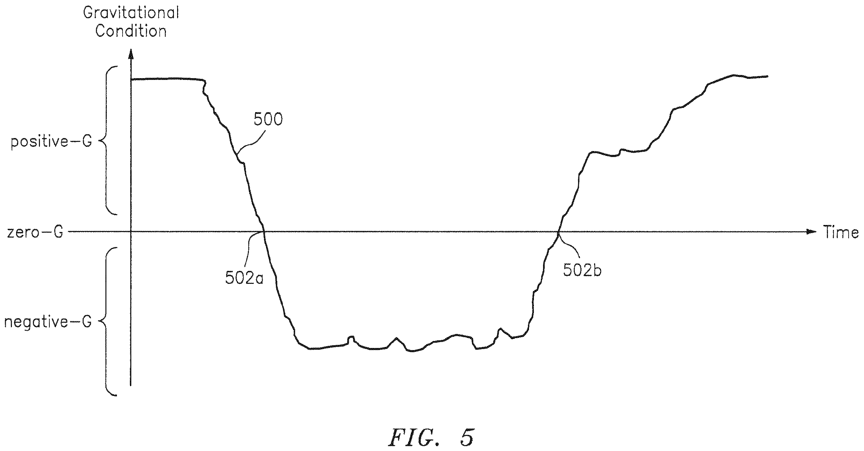

While some of the examples described above in relation to, e.g., FIGS. 2A-2C related to the existence of positive-G conditions or negative-G conditions, aspects of the disclosure may be applied in relation to zero-G conditions. One skilled in the art would appreciate that, as a practical matter, the gravitational condition may spend substantially little time at zero-G conditions in transitioning from, e.g., a positive-G condition to a negative-G condition. For example, FIG. 5 depicts an exemplary plot 500 of the variation of the gravitational condition on the vertical axis versus time on the horizontal axis, where the zero-G condition is shown as occurring at times 502a and 502b. On the other hand, in some instances/scenarios operation in one or more conditions (e.g., zero-G) may persist for extended durations/periods of time.

Technical effects and benefits of this disclosure include an ability to provide at least a threshold amount of a lubricant to one or more components of an engine. The lubricant may be reliably provided during reduced-G conditions, thereby helping to ensure continued operability of the component(s). At least a portion/region of a conduit may move substantially in unison with a fluid stored in a tank during changing gravitational conditions.

While some of the examples described herein related to providing a lubricant to a component, aspects of the disclosure may be used to provide any type of fluid (e.g., any type of liquid) to the component. Examples of such fluids may include hydraulic fluid, fuel (e.g., gasoline), refrigerant, etc.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A system (200A, B, C) comprising:
a tank (202) that stores a fluid (206);
a conduit (210) that includes a first end (210a) and a second end (210b); and
a fan drive gear system (214; 602) of a gas turbine engine (10) fluidly coupled to the first end (210a) of the conduit (210) to receive at least a portion of the fluid (206) conveyed by the conduit (210), wherein the fan drive gear system (214; 602) returns at least a portion of the fluid (206) to a tank inlet (622) of the tank (202),
wherein the conduit (210) is configured to convey at least a portion of the fluid (206) stored in the tank (202) from the second end (210b) of the conduit (210) to the first end (210a) of the conduit (210),
wherein the first end (210a) of the conduit (210) is in fluid communication with a mechanism (214) that draws at least a portion of fluid (206) from the tank (202);
**characterised in that**
a first end region of the conduit (210) coinciding with the second end (210b) of the conduit (210) has a first end region density and the fluid (206) has a fluid density, and
the first end region density is greater than or equal to the fluid density such that the first end region of the conduit (210) remains immersed in the fluid (206) stored in the tank (202) when the fluid (206) in the tank (202) is under negative gravity conditions.

2. The system of claim 1, wherein the fluid (206) includes at least one of hydraulic fluid, fuel, or refrigerant.

3. The system of claim 1 or 2, wherein the fluid (206) includes a lubricant.

4. The system of any preceding claim, further comprising a mass (218) coupled to the second end (210b) of the conduit (210).

5. The system of claim 4, wherein the first end region density is a collective density of a density of the conduit (210) at the second end (210b) of the conduit (210) and a density of the mass (218).

6. The system of claim 4 or 5, further comprising a pole (232) coupled to the mass (218), wherein the mass (218) is limited to movement along a span of the pole (232).

7. The system of claim 6, wherein a first end (234a) of the pole (232) is coupled to a first end of the tank (202), and wherein a second end (234b) of the pole (232) is coupled to a second end of the tank (202).

8. The system of claim 7, wherein at least one of the first end (234a) of the pole (232) or the first end of the tank (202) is fitted with a first stop (238a), and wherein at least one of the second end (234b) of the pole (232) or the second end of the tank (202) is fitted with a second stop (238b).

9. The system of claim 8, wherein the first stop (238a) includes at least one of a bolt and nut or an instance of an elastomeric material.

10. The system of any of claims 4 to 9, wherein the mass (218) includes a core (318a) contained within a shell (318b), wherein the core (318a) is made of a first material and the shell (318b) is made of a second material, and the second material is different from the first material, wherein, optionally, the core (318a) is made of metal and the shell (318b) is made of an elastomer.

11. The system of any of claims 4 to 10, wherein the mass (218) is substantially shaped as a sphere.

12. The system of any preceding claim, further comprising a pump (214) coupled to the first end (210a) of the conduit (210).

13. The system of any preceding claim, wherein the tank (202) is pressurized to convey the fluid (206) from the second end (210b) of the conduit (210) to the first end (210a) of the conduit (210).

14. The system of any preceding claim, wherein the conduit (210) includes a flexible conduit (402) radially inside a protective layer (404), optionally, wherein the protective layer (404) is an additional conduit (404), and wherein the flexible conduit (402) is disposed within the additional conduit (404) such that the conduit (210) is arranged as a tube-within-a-tube.

15. The system (200A; B; C) of any preceding claim wherein, the first end region density is greater than or equal to the fluid density such that the second end (210b) remains immersed in the fluid (206) stored in the tank (202) when the fluid (206) in the tank (202) is under positive gravity conditions, and wherein the second end (210b) moves substantially in unison with the fluid (206) in the tank (202) when the fluid (206) in the tank (202) is subject to a change in gravitational conditions.

## Patentansprüche

1. System (200A, B, C), umfassend:
einen Tank (202), der eine Flüssigkeit (206) speichert;
eine Leitung (210), die ein erstes Ende (210a) und ein zweites Ende (210b) beinhaltet; und
ein Gebläseantriebsgetriebesystem (214; 602) eines Gasturbinentriebwerks (10), das fluidisch an das erste Ende (210a) der Leitung (210) gekoppelt ist, um zumindest einen Teil der Flüssigkeit (206) aufzunehmen, die durch die Leitung (210) gefördert wird, wobei das Gebläseantriebsgetriebesystem (214; 602) zumindest einen Teil der Flüssigkeit (206) zu einem Tankeinlass (622) des Tanks (202) zurückführt,
wobei die Leitung (210) konfiguriert ist, um zumindest einen Teil der Flüssigkeit (206), die in dem Tank (202) gespeichert ist, von dem zweiten Ende (210b) der Leitung (210) zu dem ersten Ende (210a) der Leitung (210) zu fördern,
wobei das erste Ende (210a) der Leitung (210) in Fluidkommunikation mit einem Mechanismus (214) steht, der zumindest einen Teil der Flüssigkeit (206) aus dem Tank (202) zieht;
**dadurch gekennzeichnet, dass**
eine erste Endregion der Leitung (210), die mit dem zweiten Ende (210b) der Leitung (210) zusammenfällt, eine erste Endregiondichte aufweist und die Flüssigkeit (206) eine Flüssigkeitsdichte aufweist, und
die erste Endregiondichte größer als die oder gleich der Flüssigkeitsdichte ist, sodass die erste Endregion der Leitung (210) in der Flüssigkeit (206) eingetaucht bleibt, die in dem Tank (202) gespeichert ist, wenn die Flüssigkeit (206) in dem Tank (202) negativen Schwerkraftbedingungen unterliegt.

2. System nach Anspruch 1, wobei die Flüssigkeit (206) zumindest eines von hydraulischer Flüssigkeit, Kraftstoff oder Kältemittel beinhaltet.

3. System nach Anspruch 1 oder 2, wobei die Flüssigkeit (206) ein Schmiermittel beinhaltet.

4. System nach einem vorhergehenden Anspruch, ferner umfassend eine Masse (218), die an das zweite Ende (210b) der Leitung (210) gekoppelt ist.

5. System nach Anspruch 4, wobei die erste Endregiondichte eine kollektive Dichte einer Dichte der Leitung (210) an dem zweiten Ende (210b) der Leitung (210) und einer Dichte der Masse (218) ist.

6. System nach Anspruch 4 oder 5, ferner umfassend einen Pol (232), der an die Masse (218) gekoppelt ist, wobei die Masse (218) auf Bewegung entlang einer Spanne des Pols (232) begrenzt ist.

7. System nach Anspruch 6, wobei ein erstes Ende (234a) des Pols (232) an ein erstes Ende des Tanks (202) gekoppelt ist, und wobei ein zweites Ende (234b) des Pols (232) an ein zweites Ende des Tanks (202) gekoppelt ist.

8. System nach Anspruch 7, wobei zumindest eines von dem ersten Ende (234a) des Pols (232) oder dem ersten Ende des Tanks (202) mit einem ersten Anschlag (238a) versehen ist, und wobei zumindest eines von dem zweiten Ende (234b) des Pols (232) oder dem zweiten Ende des Tanks (202) mit einem zweiten Anschlag (238b) versehen ist.

9. System nach Anspruch 8, wobei der erste Anschlag (238a) zumindest eines von einer Schraube und einer Mutter oder einer Variante eines Elastomermaterials beinhaltet.

10. System nach einem der Ansprüche 4 bis 9, wobei die Masse (218) einen Kern (318a) beinhaltet, der sich innerhalb einer Schale (318b) befindet, wobei der Kern (318a) aus einem ersten Material hergestellt ist und die Schale (318b) aus einem zweiten Material hergestellt ist und sich das zweite Material von dem ersten Material unterscheidet, wobei optional der Kern (318a) aus Metall hergestellt ist und die Schale (318b) aus einem Elastomer hergestellt ist.

11. System nach einem der Ansprüche 4 bis 10, wobei die Masse (218) im Wesentlichen als eine Kugel geformt ist.

12. System nach einem vorhergehenden Anspruch, ferner umfassend eine Pumpe (214), die an das erste Ende (210a) der Leitung (210) gekoppelt ist.

13. System nach einem vorhergehenden Anspruch, wobei der Tank (202) unter Druck gesetzt ist, um die Flüssigkeit (206) von dem zweiten Ende (210b) der Leitung (210) zu dem ersten Ende (210a) der Leitung (210) zu fördern.

14. System nach einem vorhergehenden Anspruch, wobei die Leitung (210) eine flexible Leitung (402) radial innerhalb einer Schutzschicht (404) beinhaltet, wobei optional die Schutzschicht (404) eine zusätzliche Leitung (404) ist, und wobei die flexible Leitung (402) innerhalb der zusätzlichen Leitung (404) angeordnet ist, sodass die Leitung (210) als ein Rohr innerhalb eines Rohres angeordnet ist.

15. System (200A; B; C) nach einem vorhergehenden Anspruch, wobei die erste Endregiondichte größer als die oder gleich der Flüssigkeitsdichte ist, sodass das zweite Ende (210b) in der Flüssigkeit (206) eingetaucht bleibt, die in dem Tank (202) gespeichert ist, wenn die Flüssigkeit (206) in dem Tank (202) positiven Schwerkraftbedingungen unterliegt, und wobei sich das zweite Ende (210b) im Wesentlichen im Einklang mit der Flüssigkeit (206) in dem Tank (202) bewegt, wenn die Flüssigkeit (206) in dem Tank (202) einer Änderung der Gravitationsbedingungen ausgesetzt wird.

## Revendications

1. Système (200A, B, C), comprenant :
un réservoir (202) qui stocke un fluide (206) ;
une conduite (210) qui comporte une première extrémité (210a) et une seconde extrémité (210b) ; et
un système d'entraînement à engrenage de soufflante (214 ; 602) d'un moteur à turbine à gaz (10) couplé fluidiquement à la première extrémité (210a) de la conduite (210) afin de recevoir au moins une partie du fluide (206) transporté par la conduite (210), dans lequel le système d'entraînement à engrenage de soufflante (214 ; 602) renvoie au moins une partie du fluide (206) à une entrée (622) du réservoir (202),
dans lequel la conduite (210) est conçue pour transporter au moins une partie du fluide (206) stocké dans le réservoir (202) de la seconde extrémité (210b) de la conduite (210) à la première extrémité (210a) de la conduite (210),
dans lequel la première extrémité (210a) de la conduite (210) est en communication fluidique avec un mécanisme (214) qui tire au moins une partie du fluide (206) du réservoir (202) ;
**caractérisé en ce que**
une première région d'extrémité de la conduite (210) coïncidant avec la seconde extrémité (210b) de la conduite (210) a une densité de première région d'extrémité et le fluide (206) a une densité de fluide, et
la densité de première région d'extrémité est supérieure ou égale à la densité de fluide de sorte que la première région d'extrémité de la conduite (210) reste immergée dans le fluide (206) stocké dans le réservoir (202) lorsque le fluide (206) dans le réservoir (202) est soumis à des conditions gravitationnelles négatives.

2. Système selon la revendication 1, dans lequel le fluide (206) comprend au moins un fluide hydraulique, un carburant ou un réfrigérant.

3. Système selon la revendication 1 ou 2, dans lequel le fluide (206) comprend un lubrifiant.

4. Système selon une quelconque revendication précédente, comprenant en outre une masse (218) couplée à la seconde extrémité (210b) de la conduite (210).

5. Système selon la revendication 4, dans lequel la densité de la première région d'extrémité est une densité collective d'une densité de la conduite (210) à la seconde extrémité (210b) de la conduite (210) et d'une densité de la masse (218).

6. Système selon la revendication 4 ou 5, comprenant en outre une tige (232) couplée à la masse (218), dans lequel les mouvements de la masse (218) sont limités le long d'une étendue de la tige (232) .

7. Système selon la revendication 6, dans lequel une première extrémité (234a) de la tige (232) est couplée à une première extrémité du réservoir (202), et dans lequel une seconde extrémité (234b) de la tige (232) est couplée à une seconde extrémité du réservoir (202).

8. Système selon la revendication 7, dans lequel au moins l'une de la première extrémité (234a) de la tige (232) ou de la première extrémité du réservoir (202) est munie d'un premier arrêt (238a), et dans lequel au moins l'une de la seconde extrémité (234b) de la tige (232) ou de la seconde extrémité du réservoir (202) est munie d'un second arrêt (238b).

9. Système selon la revendication 8, dans lequel le premier arrêt (238a) comprend au moins l'un d'un boulon et d'un écrou ou d'un exemple de matériau élastomère.

10. Système selon l'une quelconque des revendications 4 à 9, dans lequel la masse (218) comprend un cœur (318a) contenu dans une coque (318b), dans lequel le cœur (318a) est constitué d'un premier matériau et la coque (318b) est constituée d'un second matériau, et le second matériau est différent du premier matériau, dans lequel, éventuellement, le cœur (318a) est constitué de métal et la coque (318b) est constituée d'un élastomère.

11. Système selon l'une quelconque des revendications 4 à 10, dans lequel la masse (218) a sensiblement la forme d'une sphère.

12. Système selon une quelconque revendication précédente, comprenant en outre une pompe (214) couplée à la première extrémité (210a) de la conduite (210).

13. Système selon une quelconque revendication précédente, dans lequel le réservoir (202) est mis sous pression pour transporter le fluide (206) de la seconde extrémité (210b) de la conduite (210) à la première extrémité (210a) de la conduite (210).

14. Système selon une quelconque revendication précédente, dans lequel la conduite (210) comprend une conduite flexible (402) radialement à l'intérieur d'une couche protectrice (404), éventuellement, dans lequel la couche protectrice (404) est une conduite supplémentaire (404), et dans lequel la conduite flexible (402) est disposée à l'intérieur de la conduite supplémentaire (404) de sorte que la conduite (210) est agencée sous forme d'un tube dans un tube.

15. Système (200A ; B ; C) selon une quelconque revendication précédente, dans lequel la densité de première région d'extrémité est supérieure ou égale à la densité de fluide de sorte que la seconde extrémité (210b) reste immergée dans le fluide (206) stocké dans le réservoir (202) lorsque le fluide (206) dans le réservoir (202) est soumis à des conditions gravitationnelles positives, et dans lequel la seconde extrémité (210b) se déplace sensiblement à l'unisson avec le fluide (206) dans le réservoir (202) lorsque le fluide (206) dans le réservoir (202) est soumis à une variation des conditions gravitationnelles.
